# EUROPÄISCHE PATENTANMELDUNG

(11) **EP 4 529 772 A2**
(43) Veröffentlichungstag der Anmeldung: **02.04.2025**
(21) Anmeldenummer: 24220237.2
(22) Anmeldetag: 20.01.2020
(51) Int. Cl.: A23G 1/00, A23G 1/32

(54) **VEGANE SCHOKOLADE**

(30) Priorität: 22.01.2019 EP 19153064
(62) Teilanmeldung aus: 20700914.3
(71) Anmelder: Katjes Fassin GmbH + Co. Kommanditgesellschaft, 46446 Emmerich am Rhein (DE)
(72) Erfinder: BACHMÜLLER, Tobias, 46446 Emmerich am Rhein (DE); BOEKHAUS, Detlev, 32051 Herford (DE)
(74) Vertreter: Bird & Bird LLP

(57) **Zusammenfassung**

Die vorliegende Erfindung betrifft eine Schokoladenmasse, beinhaltend mindestens einen Bestandteil von Kakaobohnen ausgewählt aus der Gruppe bestehend aus Kakaobutter und Kakaomasse, mindestens ein Süßungsmittel und mindestens 1 Gew.-%, bezogen auf das Gesamtgewicht der Schokoladenmasse, hydrolysiertes Hafermehl. Die Erfindung betrifft weiterhin ein Schokoladenerzeugnis, hergestellt aus dieser Schokoladenmasse, ein Verfahren zur Herstellung einer Schokoladenmasse, die durch dieses Verfahren erhältliche Schokoladenmasse, ein Verfahren zur Herstellung eines Schokoladenerzeugnisses, das durch dieses Verfahren erhältliche Schokoladenerzeugnis und die Verwendung von hydrolysiertem Hafermehl zur Herstellung veganer Schokolade.

## Beschreibung

Die vorliegende Erfindung betrifft eine Schokoladenmasse, beinhaltend mindestens einen Bestandteil von Kakaobohnen ausgewählt aus der Gruppe bestehend aus Kakaobutter und Kakaomasse, mindestens ein Süßungsmittel und mindestens 1 Gew.-%, bezogen auf das Gesamtgewicht der Schokoladenmasse, hydrolysiertes Hafermehl. Die Erfindung betrifft weiterhin ein Schokoladenerzeugnis, hergestellt aus dieser Schokoladenmasse, ein Verfahren zur Herstellung einer Schokoladenmasse, die durch dieses Verfahren erhältliche Schokoladenmasse, ein Verfahren zur Herstellung eines Schokoladenerzeugnisses, das durch dieses Verfahren erhältliche Schokoladenerzeugnis und die Verwendung von hydrolysiertem Hafermehl zur Herstellung veganer Schokolade.

Bei dem am meisten verwendeten Verfahren zur Herstellung von Schokolade wird aus Schokoladenrohstoffen (Zucker, Kakaobutter, ggf. Kakaomasse, und - wenn Milchschokolade hergestellt wird - Milchpulver) eine Grundmasse bereitet, indem die Rohstoffe zu einer homogenen, plastischen Masse gemischt und geknetet werden. Diese Grundmasse wird weiterverarbeitet durch Walzen, das in erster Linie zur Verringerung der Teilchengröße des Zuckers dient, anschließend durch eine mechanische Wärmebehandlung, d.h. Conchieren, vor dem oder während dessen eventuell einzusetzende Emulgier- und Aromastoffe und Intensiv-Süßstoffe zugesetzt werden. Während des Conchierens werden der endgültige Geschmack der Schokolade gebildet und die gewünschte Konsistenz der Masse erhalten.

Eine Schokoladenmasse wird beispielsweise in CN 109 090 314 A1 beschrieben, welche Xylitol, Isomalt, Pfefferminzextrakt, Kakaopulver, Kakaobutter, Magermilchpulver Hafermehl enthält. Das Hafermehl wird durch Pulverisieren von Haferflocken und anschließendes Absieben durch ein 80-mesh-Sieb erhalten.

Strenge Vegetarier, die sich auch "Veganer" nennen, ernähren sich ausschließlich von pflanzlichen Produkten und verzichten auf Milch, Milchprodukte und Eier. Es besteht daher zunehmend Bedarf auch an veganer Schokolade, insbesondere an solcher veganen Schokolade, die in ihrem Aussehen und ihrem Geschmack herkömmlicher Vollmichschokolade gleicht, die aber im Gegensatz zu herkömmlicher Vollmichschokolade keine tierischen Zusatzstoffe, insbesondere kein Milchpulver, enthält. Zur Herstellung derartiger veganer Schokolade ist aus dem Stand der Technik bekannt, das Vollmichpulver durch Hafermehl oder Hafermilch zu ersetzen. Entsprechende Schokoladen sind beispielsweise unter der Bezeichnung "ChocOat" von der Firma Goodio (Helsinki, Finnland) erhältlich. Diese aus dem Stand der Technik bisher bekannten veganen Schokoladen zeichnen sich jedoch oftmals durch eine vergleichsweise grobkörnige und im Vergleich zu herkömmlicher Milchschokolade schleifige Textur beim Verzehr auf. Das in den Schokoladen enthaltene Hafermehl führt darüberhinaus beim Verzehr zu einem verzögerten Schmelz und damit auch zu einer im Vergleich zu Milchschokolade als unangenehm empfundenen Textur.

Allgemein ist es eine Aufgabe der vorliegenden Erfindung, einen Nachteil, der sich aus dem Stand der Technik ergibt, zumindest teilweise zu überwinden. Eine weitere Aufgabe der vorliegenden Erfindung ist es, eine vorzugsweise vegane Schokoladenmasse bereitzustellen, die in ihrem Aussehen und ihrem Geschmack herkömmlicher Vollmichschokolade gleicht, die aber ohne tierische Zusatzstoffe, insbesondere ohne Milchpulver, hergestellt worden ist und mittels der Schokoladenerzeugnisse hergestellt werden können, die vergleichbare Eigenschaften insbesondere hinsichtlich der Textur und des Schmelzes im Mund aufweisen wie herkömmliche, Milchpulver beinhaltende Schokoladenerzeugnisse. Eine weitere Aufgabe der vorliegenden Erfindung ist es, ein Verfahren zur Herstellung einer solchen Schokoladenmasse anzugeben.

Ein Beitrag zur mindestens teilweisen Erfüllung mindestens einer der zuvor genannten Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen.

Einen Beitrag zur Erfüllung mindestens einer der erfindungsgemäßen Aufgaben leistet eine Schokoladenmasse, beinhaltend mindestens einen Bestandteil von Kakaobohnen ausgewählt aus der Gruppe bestehend aus Kakaobutter und Kakaomasse, mindestens ein Süßungsmittel und mindestens 1 Gew.-%, besonders bevorzugt mehr als 8 Gew.-%, jeweils bezogen auf das Gesamtgewicht der Schokoladenmasse, hydrolysiertes Hafermehl. Besonders bevorzugt beinhaltet die erfindungsgemäße Schokoladenmasse das hydrolysierte Hafermehl in einer Menge in einem Bereich von 2,5 bis 25 Gew.-%, noch mehr bevorzugt in einem Bereich von 5 bis 20 Gew.-% und am meisten bevorzugt in einem Bereich von 8,5 bis 15 Gew.-%, jeweils bezogen auf das Gesamtgewicht der Schokoladenmasse.

### Schokoladenmasse

Unter Schokolade versteht man im Allgemeinen ein vorzugsweise festes Lebens- und Genussmittel, dessen wesentliche Bestandteile Kakaoerzeugnisse und Zuckerarten, im Falle von Milchschokolade auch Milcherzeugnisse, sind. Ein Schokoladenmasse ist eine Menge von Schokolade, welche zu einem Schokoladenerzeugnis formbar ist. Hierzu wird die Schokoladenmasse vorzugsweise mindestens teilweise verflüssigt, aber nicht notwendigerweise vollständig aufgeschmolzen. Bevorzugt wird die Schokoladenmasse zu dem Formen nicht vollständig aufgeschmolzen. Es gibt eine Vielzahl von Sorten und Qualitäten, Formen und Geschmacksrichtungen von Schokolade. Es wird beispielsweise zwischen dunkler Schokolade (auch als Edelbitter, Zartbitter- oder Herrenschokolade charakterisiert), im Vergleich zur dunklen Schokolade helleren Milchschokolade und im Vergleich zur Milchschokolade helleren weißer Schokolade unterschieden. Werden hierin die Begriffe dunkle Schokoladen und weiße Schokolade verwendet, so genügt die bezeichnete Schokolade vorzugsweise der jeweiligen Definition in Anlage 1 der Kakaoverordnung (KVO, Fassung vom 15. Dezember 2003) zu den §§ 1, 2, 3. Unter Punkt 3 der Anlage 1 der KVO ist die dunkle Schokolade definiert, wobei diese dort lediglich als "Schokolade" bezeichnet wird. Unter Punkt 5 der Anlage 1 der KVO ist die weiße Schokolade definiert. Eine zum Backen und Glasieren mit einem höheren Fettanteil versehene Schokolade wird als Kuvertüre bezeichnet und gehandelt. All die vorstehend genannten Schokoladensorten sind für die Schokoladenmasse und das Schokoladenerzeugnis der Erfindung bevorzugt. Gemäß einer bevorzugten Ausführungsform der erfindungsgemäßen Schokoladenmasse handelt es sich bei dieser Schokoladenmasse jedoch um eine Kuvertüre. Besonders bevorzugt ist die Schokoladenmasse der Erfindung eine vegane Schokoladenmasse, vorzugsweise eine vegane Kuvertüre, die keine tierischen Bestandteile, insbesondere keine Milch, kein Vollmilchpulver, kein Butterreinfett und keinen Milchzucker, besonders bevorzugt kein Vollmilchpulver, kein Butterreinfett und keinen Milchzucker enthält.

### Kakaobutter und Kakaomasse

Die erfindungsgemäße Schokoladenmasse beinhaltend mindestens einen Bestandteil von Kakaobohnen ausgewählt aus der Gruppe bestehend aus Kakaobutter und Kakaomasse, wobei die Menge an Kakaobutter und Kakaomasse von der Art der Schokolade abhängt. Die jeweiligen Mengen dieser beiden Bestandteile entsprechen den in der in der KVO in der Fassung vom 15. Dezember 2003 definierten Mengen. Bevorzugt handelt es sich bei der erfindungsgemäßen Schokoladenmasse um eine Kuvertüre enthaltend die Kakaobutter in einer Menge in einem Bereich von 10 bis 50 Gew.-%, besonders bevorzugt in einem Bereich von 20 bis 40 Gew.-% und noch mehr bevorzugt in einem Bereich von 25 bis 35 Gew.-% und die Kakaomasse in einer Menge in einem Bereich von 1 bis 25 Gew.-%, besonders bevorzugt in einem Bereich von 2,5 bis 20 Gew.-% und noch mehr bevorzugt in einem Bereich von 5 bis 15 Gew.-%, jeweils bezogen auf das Gewicht der Schokoladenmasse.

Hergestellt werden kann die Kakaomasse, indem a) entweder zunächst die Kakaobohnen geschält, in mittelgroße Stücke (die so genannten Nibs) gebrochen werden, die Nibs dann geröstet und anschließend in Mühlen zerkleinert und so zu feiner Kakaomasse vermahlen werden oder indem b) die ungeschälten Kakaobohnen geröstet werden und erst nach dem Rösten die Bohnen geschält, in die Nibs gebrochen und dann zu feiner Kakaomasse vermahlen werden. Durch das Rösten wird primär eine Veredelung und Intensivierung des Aromas der Kakaobohnen angestrebt. Durch die beim Mahlen entstehende Wärme und durch den mechanischen Aufschluss der fetthaltigen Pflanzenzellen wird der in den Kakaobohnen enthaltene Fettanteil, die so genannte Kakaobutter, freigesetzt und die Kakaomasse verflüssigt sich. Je nach Kakaosorte beträgt der in den Bohnen enthaltene Anteil an Kakaobutter, deren Schmelzbereich bei ca. 30 bis 37 °C liegt, etwa 50 bis 55 Gew.-%, in Ausnahmefällen von bis zu 56 Gew.-%. Die beim Mahlen entstandene Kakaomasse ist eine dunkle dickflüssige Masse, die beim Abkühlen auf Raumtemperatur erstarrt. Aus dieser Kakaomasse wird die darin enthaltene Kakaobutter in Hochleistungspressen bei Temperaturen von 80 °C bis 90 °C und einem Druck von 500 bar abgepresst. Zur Herstellung von Schokolade wird als Bestandteil der Kakaobohne die nichtabgepresste Kakaomasse, eine Mischung aus nicht-abgepresster Kakaomasse und zusätzlich zugesetzter Kakaobutter oder ausschließlich Kakaobutter (weiße Schokolase) eingesetzt.

### Süßungsmittel

Die erfindungsgemäße Schokoladenmasse beinhaltet mindestens ein Süßungsmittel. Bei dem mindestens einen Süßungsmittel handelt es sich vorzugsweise um einen Stoff oder um eine Mischung von Stoffen, die dem aus der Schokoladenmasse hergestellten Schokoladenerzeugnis sowohl Körper als auch Süße verleihen. Bei diesem Süßungsmittel kann es sich um einen Zucker wie Saccharose oder um einen Saccharose-Austauschstoff wie Fruktose, Glukose, Zuckeralkohol (z. B. Xylit, Sorbit, Mannit, Laktit, Maltit, Isomalt), Polydextrose, Inulin, einem Intensiv-Süßstoff (z. B. Aspartam) oder um eine Mischung aus mindestens zwei dieser Sü-βungsmittel handelt. Besonders bevorzugt als Süßungsmittel sind Zucker, insbesondere Saccharose, Fructose oder eine Mischung hiervon. Bevorzugt enthält die erfindungsgemäße Schokoladenmasse das mindestens eine Süßungsmittel in einer Menge in einem Bereich von 20 bis 80 Gew.-%, besonders bevorzugt in einem Bereich von 25 bis 70 Gew.-% und noch mehr bevorzugt in einem Bereich von 30 bis 60 Gew.-%, jeweils bezogen auf das Gewicht der Schokoladenmasse.

### Hydrolysiertes Hafermehl

Die erfindungsgemäße Schokoladenmasse ist dadurch gekennzeichnet, dass sie - vorzugsweise als Ersatz für das üblicherweise eingesetzte Milchpulver - hydrolysiertes Hafermehl (auch bezeichnet als "hydrolysiertes Haferpulver") enthält. Hydrolysiertes Hafermehl bzw. hydrolysiertes Haferpulver kann durch das Mahlen von Haferflocken und anschließend vorzugsweise enzymatisch erfolgende Hydrolyse hergestellt werde. Gemäß einer besonders bevorzugten Ausführungsform der erfindungsgemäßen Schokoladenmasse handelt es sich bei dem hydrolysierten Hafermehl um hydrolysiertes Hafermehl, welches durch enzymatische Hydrolyse von Hafermehl mit α-Amylase erhältlich ist, besonders bevorzugt erhalten wurde. Verfahren zur Herstellung von mit α-Amylase hydrolysiertem Hafermehl sind in der WO 89/08405 A1 oder der EP 2 842 430 A1 beschrieben. Darüberhinaus ist mit α-Amylase hydrolysiertes Hafermehl auch kommerziell beispielsweise von der Firma inter*quell* GmbH (Großaitingen, Deutschland) unter der Artikel-Nr. 3359xx erhältlich.

### Weitere Zusatzstoffe

Die Schokoladenmasse kann, neben dem mindestens einen Bestandteil von Kakaobohnen ausgewählt aus der Gruppe bestehend aus Kakaobutter und Kakaomasse, dem mindestens ein Sü-βungsmittel und dem Hafermehl weitere Zusatzstoffe ausgewählt aus der Gruppe bestehend aus mindestens einem Salz, mindestens einem Emulgator, mindestens einem ölhaltigen Bestandteil, mindestens einem Aromastoff, mindestens einem Gewürz und einer Kombination aus mindestens zwei davon, beinhalten, wobei die Schokoladenmasse besonders bevorzugt alle der vorstehend aufgezählten Bestandteile beinhaltet.

Bei dem mindestens einen Salz handelt es sich vorzugsweise um Speisesalz, ganz besonders bevorzugt um Meersalz, Steinsalz, Kristallsalz oder einer Mischung hieraus. Die Menge an Salz liegt üblicherweise in einem Bereich von 0,01 bis 5 Gew.-%, besonders bevorzugt in einem Bereich von 0,1 bis 1 Gew.-%, jeweils bezogen auf das Gesamtgewicht der Schokoladenmasse.

Bei dem mindestens einen Emulgator kann es sich um jeden dem Fachmann für die Herstellung von Schokolade geeigneten erscheinenden Emulgator handeln. Beispiele für geeignete Emulgatoren schließen Lecithin, gewonnen aus Pflanzenquellen, wie etwa Sojabohne, Carthamus, Mais, etc., fraktionierte Lecithine, angereichert in entweder Phosphatidylcholin oder Phosphatidylethanolamin oder beiden, Mono- und Diglyceride, Diacetylweinsäureester von Mono- und Diglyceriden (auch bezeichnet als DATEM), Mononatriumphosphatderivate von Mono- und Diglyceriden von essbaren Fetten oder Ölen, Sorbitanmonostearat, hydroxyliertes Lecithin, lactylierte Fettsäureester von Glycerol und Propylenglykol, Polyglycerolester von Fettsäuren, Propylenglykolmono- und -diester von Fetten und Fettsäuren ein. Besonders bevorzugt als Emulgator ist Lecithin, ganz besonders bevorzugt Sonnenblumenlecithin. Bevorzugt enthält die erfindungsgemäße Schokoladenmasse den mindestens einen Emulgator in einer Menge in einem Bereich von 0,1 bis 1,0 Gew.-%, besonders bevorzugt in einem Bereich von 0,3 bis 0,6 Gew.-%, jeweils bezogen auf das Gewicht der Schokoladenmasse.

Bei dem mindestens einen Aromastoff kann es sich beispielsweise um Vanille handeln, wobei ein Vanilleextrakt als Aromastoff am meisten bevorzugt ist. Bevorzugte Gewürze sind ausgewählt aus der Gruppe bestehend aus Chili, Zimt, Hanf, Pfeffer und Thymian, oder Mischungen aus mindestens zwei davon. Die Gesamtmenge an Aromastoffen und Gewürzen liegt üblicherweise in einem Bereich von 0,01 bis 5 Gew.-%, besonders bevorzugt in einem Bereich von 0,05 bis 0,5 Gew.-%, jeweils bezogen auf das Gesamtgewicht der Schokoladenmasse.

Als ölhaltiger Bestandteil (hierzu zählen auch Öle als solche) kommen alle dem Fachmann bekannten ölhaltigen Bestandteile in Betracht, die der Fachmann als für die Herstellung von Schokolade geeignet erachtet. Ein bevorzugtes Öl ist ein Speiseöl. Gemäß "Neufassung der Leitsätze für Speisefette und Speiseöle des Deutschen Lebensmittelbuches" vom 3. November 2011 (veröffentlicht in "Textsammlung Lebensmittelrecht"; Klein, Raabe, Weiss; Band 1 - 5; Stand Juni 2016; herausgegeben von Prof. Dr. Matthias Horst; Behr's Verlag GmbH & Co. KG; ISBN 978-3-86022-314-7) stammen Speisefette und Speiseöle aus den Samen, Keimen oder Früchten von Pflanzen oder aus dem tauglich beurteilten Fettgewebe von Schlachttieren einschließlich Geflügel und Fischen. Speisefette und Speiseöle bestehen fast ausschließlich aus den Triglyceriden von Fettsäuren und sind praktisch wasserfrei. Sie können geringe Mengen anderer Stoffe aus dem Ausgangsmaterial wie Phosphatide, Wachse, unverseifbare Bestandteile, Mono- und Diglyceride und freie Fettsäuren enthalten. Speisefette sind bei 20 °C fest oder halbfest. Speiseöle sind bei 20 °C flüssig. Speisefette und Speiseöle sind von art- und sortentypischer Farbe. Speiseöle sind im Allgemeinen klar. Kalt gepresste Öle können Sediment (pflanzeneigene Bestandteile) enthalten. Ein besonders bevorzugtes Speiseöl im Hinblick auf die vorzugsweise vegane Natur der erfindungsgemäßen Schokoladenmasse ist ein pflanzliches Speiseöl oder ein Pflanzenöl.

Pflanzliche Speisefette werden in der Regel nach ihrer botanischen Herkunft bezeichnet, beispielsweise Kokosfett. Die botanischen Bezeichnungen sind auch dann üblich, wenn das pflanzliche Speisefett technologisch bedingt maximal 2 Gew.-% pflanzliche Speisefette anderer botanischer Herkunft enthält. Pflanzliche Speiseöle werden in der Regel nach ihrer botanischen Herkunft bezeichnet, beispielsweise Rapsöl. Diese botanischen Bezeichnungen sind auch dann üblich, wenn das pflanzliche Speiseöl technologisch bedingt maximal 2 Gew.-% pflanzliche Speiseöle anderer botanischer Herkunft enthält. Mischungen aus pflanzlichen Speisefetten und / oder pflanzlichen Speiseölen unterschiedlicher botanischer Herkunft werden als Pflanzenfett oder Pflanzenöl bezeichnet. Sie können auch unter Nennung ihrer botanischen Herkünfte bzw. ihres Verwendungszweckes bezeichnet werden. Die obigen Angaben zu Ölen und Fetten sind "Textsammlung Lebensmittelrecht"; Klein, Raabe, Weiss; Band 1 - 5; Stand Juni 2016; herausgegeben von Prof. Dr. Matthias Horst; Behr's Verlag GmbH & Co. KG; ISBN 978-3-86022-314-7; 5211: "Neufassung der Leitsätze für Speisefette und Speiseöle des Deutschen Lebensmittelbuches" vom 3. November 2011 entnommen.

Ungeachtet der oben zitierten "*Neufassung der Leitsätze für Speisefette und Speiseöle des Deutschen Lebensmittelbuches"* (Olivenöl ist dort ausgenommen) sind bevorzugte pflanzliche Öle Haselnussöl, Mandelöl, Rapsöl, Leinöl, Sojaöl, Olivenöl, Sonnenblumenöl, Sesamöl, Safloröl, Erdnussöl, Kokosnussöl, Walnussöl, Mohnöl, Weizenkeimöl, Baumwollsaatöl, Babassufett, Traubenkernöl, Maiskeimöl, Palmöl und Reiskleieöl. Ein bevorzugtes pflanzliches Öl ist ein Nussöl, wobei Haselnussöl und Mandelöl bevorzugte Nussöle sind und Haselnussöl im Rahmen der Erfindung ein ganz besonders bevorzugtes Öl ist. Ein bevorzugter ölhaltiger Bestandteil ist eine ölhaltige Paste. Eine bevorzugte Paste beinhaltet die obigen Samen, Keime oder Früchte von Pflanzen oder Mischungen davon in zerstoßener, gemahlener, geschroteter oder zerkleinerter Form. Gemäß *"*Textsammlung Lebensmittelrecht"; Klein, Raabe, Weiss; Band 1 - 5; Stand Juni 2016; herausgegeben von Prof. Dr. Matthias Horst; Behr's Verlag GmbH & Co. KG; ISBN 978-3-86022-314-7; 7325: "ALS-Stellungnahmen zu Ölsamen und daraus hergestellten Massen und Süßwaren", "*Anwendung der Leitsätze des Deutschen Lebensmittelbuches für Ölsamen und daraus hergestellte Massen und Süßwaren (Nr. 2014*/*11)*", "Beschluss" werden unabhängig von der botanischen Klassifizierung unter dem allgemein umgangssprachlich gebräuchlichen Oberbegriff "Nüsse" auch z.B. Mandeln, Pistazien, Para-, Erdnüsse und Cashewkerne verstanden. Besonders bevorzugt ölhaltige Bestandteile sind eine Haselnusspasste, eine Mandelpaste oder eine Mischung hieraus. Die Menge an ölhaltigen Bestandteilen liegt vorzugsweise in einem Bereich von 1 bis 15 Gew.-%, besonders bevorzugt in einem Bereich von 5 bis 10 Gew.-%.

Einen Beitrag zur Lösung der eingangs genannten Aufgaben leistet auch ein Schokoladenerzeugnis, hergestellt aus einer erfindungsgemäßen Schokoladenmasse.

Ein Schokoladenerzeugnis ist ein Körper, welches zu mindestens 25 Gew.-%, bezogen auf das Gesamtgewicht des Schokoladenerzeugnisses, aus einer Schokoladenmasse besteht. Hierunter fallen Schokoladenfertigerzeugnisse und Halbfertigprodukte. Ein Schokoladenfertigerzeugnis ist ein Formkörper, welcher zum sofortigen Verzehr durch den Endkunden ohne weitere Verarbeitungsschritte geeignet ist. So werden vorzugweise Form, Farbe, Oberflächenbeschaffenheit, Haptik und Geschmack des Schokoladenfertigerzeugnisses vor dem Verzehr nicht mehr verändert. Hiervon zu unterscheiden sind Halbfertigprodukte, welche einer Weiterverarbeitung zu einem Endprodukt zu unterziehen sind. Eine solche Weiterverarbeitung beinhaltet in der Regel mindestens eine Änderung einer Form des Produkts bzw. Erzeugnisses. Bevorzugte Schokoladenfertigerzeugnisse sind beispielweise aber nicht abschließend Konfekt, Schokoladenbonbons, Schokoladenfiguren, Schokoladentafeln und Schokoladenhohlkörper.

Einen Beitrag zur Lösung der eingangs genannten Aufgaben leistet auch ein Verfahren zur Herstellung einer vorzugsweise veganen Schokoladenmasse, umfassend die Verfahrensschritte:
i) Mischen von mindestens einem Süßungsmittel mit mindestens einem Bestandteil von Kakaobohnen ausgewählt aus der Gruppe bestehend aus Kakaobutter und Kakaomasse unter Erhalt einer Grundmasse;
ii) Herstellung einer Schokoladenmasse aus dieser Grundmasse mittels eines Zerkleinerungs- und Conchierschritte umfassenden Verfahrens;
wobei während des Verfahrensschrittes i), während des Verfahrensschrittes ii) oder während beider Verfahrensschritte i) und ii) hydrolysiertes Hafermehl in einer solchen Menge eingesetzt wird, dass die im Verfahrensschritt ii) erhaltene Schokoladenmasse mindestens 1 Gew.-%, besonders bevorzugt mehr als 8 Gew.-%, jeweils bezogen auf das Gesamtgewicht der Schokoladenmasse, des hydrolysierten Hafermehls beinhaltet. Besonders bevorzugt beinhaltet die im Verfahrensschritt ii) erhaltene vorzugsweise vegane Schokoladenmasse das hydrolysierte Hafermehl in einer Menge in einem Bereich von 2,5 bis 25 Gew.-%, noch mehr bevorzugt in einem Bereich von 5 bis 20 Gew.-% und am meisten bevorzugt in einem Bereich von 8,5 bis 15 Gew.-%, jeweils bezogen auf das Gesamtgewicht der Schokoladenmasse.

Im Verfahrensschritt i) wird zunächst das mindestens eine Süßungsmittel mit dem mindestens einen Bestandteil von Kakaobohnen ausgewählt aus der Gruppe bestehend aus Kakaobutter und Kakaomasse unter Erhalt einer Grundmasse vermischt. Gemäß einer bevorzugten Ausführungsform des erfindungsgemäßen Verfahrens wird das hydrolysierte Hafermehl während des Verfahrensschrittes i) eingesetzt, indem das hydrolysierte Hafermehl mit dem mindestens einem Süßungsmittel und dem mindestens einem Bestandteil von Kakaobohnen ausgewählt aus der Gruppe bestehend aus Kakaobutter und Kakaomasse unter Erhalt einer Grundmasse vermischt wird. Das Mischen des hydrolysierten Hafermehls mit dem mindestens einen Sü-βungsmittel und dem mindestens einen Bestandteil von Kakaobohnen ausgewählt aus der Gruppe bestehend aus Kakaobutter und Kakaomasse kann mittels üblicher, zur Herstellung von Schokolade eingesetzter Mischvorrichtungen erfolgen.

Als Süßungsmittel sind wiederum diejenigen Süßungsmittel bevorzugt, die eingangs im Zusammenhang mit der erfindungsgemäßen Schokoladenmasse als bevorzugte Süßungsmittel genannt wurden. Gleiches gilt auch für die Menge an Süßungsmittel (und ebenso für die Menge an Kakaobutter bzw. Kakaomasse).

Bei dem im erfindungsgemäßen Verfahren einsetzten hydrolysierten Hafermehl handelt es sich vorzugsweise um hydrolysiertes Hafermehl, welches erhältlich ist, ganz besonders bevorzugt welches erhalten wurde, durch enzymatische Hydrolyse von Hafermehl mit α-Amylase. In diesem Zusammenhang ist es auch bevorzugt, dass das hydrolysierte Hafermehl mindestens eine der folgenden Eigenschaften, vorzugsweise alle der folgenden Eigenschaften aufweist:
(α1) einen Energiegehalt in einem Bereich von 200 bis 800 Kcal, besonders bevorzugt in einem Bereich von 300 bis 700 Kcal und am meisten bevorzugt in einem Bereich von 400 bis 600 Kcal;
(α2) ein Schüttgewicht in einem Bereich von 100 bis 900 g/l, besonders bevorzugt in einem Bereich von 200 bis 800 g/l und am meisten bevorzugt in einem Bereich von 300 bis 700 g/l;
(α3) einen pH-Wert in einem Bereich von 4 bis 9, besonders bevorzugt in einem Bereich von 5 bis 8 und am meisten bevorzugt in einem Bereich von 6 bis 7;
(α4) einen Gehalt an α-Amylase in einem Bereich von 0,1 bis 10,0 E/g, besonders bevorzugt in einem Bereich von 0,25 bis 5,0 E/g und am meisten bevorzugt in einem Bereich von 0,5 bis 1,5 E/g.

Für den Einsatz in dem erfindungsgemäßen Verfahren geeignete hydrolysierte Hafermehle sind wiederum in der WO 89/08405 A1 oder der EP 2 842 430 A1 beschrieben oder kommerziell beispielsweise von der Firma inter*quell* GmbH (Großaitingen, Deutschland) unter der Artikel-Nr. 3359xx erhältlich.

Im Verfahrensschritt ii) wird sodann aus der im Verfahrensschritt i) erhaltenen Grundmasse mittels eines Zerkleinerungs- und Conchierschritte umfassenden Verfahrens eine Schokoladenmasse hergestellt. Das Zerkleinern der das Süßungsmittel enthaltenden Mischung kann durch Walzen oder durch Mahlen erfolgen. Das Walzen oder Mahlen kann darüberhinaus in einem Schritt erfolgen, wenn ein gemahlenes Süßungsmittel verwendet wird, oder in zwei Schritten, wenn ein kristallines Süßungsmittel verwendet wird. Wenn ein ultrafeines Sü-βungsmittel (Teilchengröße ≤ ca. 20 µm) verwendet wird, kann dieser Mahl- oder Walzschritt entfallen. Das Conchieren kann in üblicher Weise durchgeführt werden.

Gemäß einer besonders bevorzugten Ausführungsform des erfindungsgemäßen Verfahrens enthält die im Verfahrensschritt ii) erhaltene Schokoladenmasse kein Vollmilchpulver, kein Butterreinfett und keinen Milchzucker.

Weiterhin ist es erfindungsgemäß bevorzugt, dass der Schokoladenmasse vor, während oder nach dem Conchieren mindestens ein Zusatzstoff ausgewählt aus der Gruppe bestehend aus mindestens einem Salz, mindestens einem Emulgator, mindestens einem ölhaltigen Bestandteil, mindestens einem Aromastoff, mindestens einem Gewürz und einer Mischung aus mindestens zwei dieser Bestandteile zugesetzt wird.

Bevorzugte Salze, Emulgatoren, ölhaltige Bestandteile, Aromastoffe und Gewürze sind wiederum diejenigen Salze, Emulgatoren, ölhaltige Bestandteile, Aromastoffe und Gewürze, die bereits eingangs im Zusammenhang mit der erfindungsgemäßen Schokoladenmasse als bevorzugte Zusatzstoffe genannt worden sind. Gleiches gilt auch für die Mengen, in denen diese Zusatzstoffe eingesetzt werden.

Einen Beitrag zur Lösung der eingangs genannten Aufgaben leistet auch eine Schokoladenmasse, die durch das erfindungsgemäße Verfahren zur Herstellung einer Schokoladenmasse erhältlich ist.

Einen Beitrag zur Lösung der eingangs genannten Aufgabe leistet weiterhin ein Verfahren zur Herstellung eines Schokoladenerzeugnisses, umfassend die Verfahrensschritte:
I) Bereitstellen einer erfindungsgemäßen Schokoladenmasse oder einer mittels des erfindungsgemäßen Verfahren zur Herstellung einer Schokoladenmasse erhältlichen Schokoladenmasse;
II) Formen der Schokoladenmasse unter Erhalt eines Schokoladenerzeugnisses.

Einen Beitrag zur Lösung der eingangs genannten Aufgaben leistet auch ein Schokoladenerzeugnis, erhältlich durch das erfindungsgemäße Verfahren zur Herstellung eines Schokoladenerzeugnisses.

Einen Beitrag zur Lösung der eingangs genannten Aufgaben leistet auch die Verwendung von hydrolysiertem Hafermehl zur Herstellung veganer Schokolade. Vorzugsweise wird dabei das hydrolysierte Hafermehl als Ersatz für das üblicherweise zur Herstellung von Vollmichschokolade verwendete Vollmilchpulver eingesetzt.

Vorzugsweise handelt es sich bei diesem hydrolysierten Hafermehl um hydrolysiertes Hafermehl, welches erhältlich ist, ganz besonders bevorzugt welches erhalten wurde, durch enzymatische Hydrolyse von Hafermehl mit α-Amylase. In diesem Zusammenhang ist es auch bevorzugt, dass das hydrolysierte Hafermehl mindestens eine der folgenden Eigenschaften, vorzugsweise alle der folgenden Eigenschaften aufweist:
(α1) einen Energiegehalt in einem Bereich von 200 bis 800 Kcal, besonders bevorzugt in einem Bereich von 300 bis 700 Kcal und am meisten bevorzugt in einem Bereich von 400 bis 600 Kcal;
(α2) ein Schüttgewicht in einem Bereich von 100 bis 900 g/l, besonders bevorzugt in einem Bereich von 200 bis 800 g/l und am meisten bevorzugt in einem Bereich von 300 bis 700 g/l;
(α3) einen pH-Wert in einem Bereich von 4 bis 9, besonders bevorzugt in einem Bereich von 5 bis 8 und am meisten bevorzugt in einem Bereich von 6 bis 7;
(α4) einen Gehalt an α-Amylase in einem Bereich von 0,1 bis 10,0 E/g, besonders bevorzugt in einem Bereich von 0,25 bis 5,0 E/g und am meisten bevorzugt in einem Bereich von 0,5 bis 1,5 E/g.

Für die erfindungsgemäße Verwendung geeignete hydrolysierte Hafermehle sind wiederum in der WO 89/08405 A1 oder der EP 2 842 430 A1 beschrieben oder kommerziell beispielsweise von der Firma inter*quell* GmbH (Großaitingen, Deutschland) unter der Artikel-Nr. 3359xx erhältlich.

Die Erfindung wird nun anhand eines nichtlimitierenden Beispiels näher erläutert:

### BEISPIELE

### Beispiel 1:

Es wurde eine vegane Schokoladenkuvertüre (38% Kakao) aus den folgenden Bestandteilen hergestellt (die Anteile sind in Gew.-% bezogen auf die Gesamtmenge der Masse angegeben):

### Bestandteil

| | |
|---|---|
| Weißzucker | 40,90 |
| Kakaobutter | 27,80 |
| Hafermehl (mit α-Amylase hydrolysiert) | 10,00 |
| Kakaomasse | 12,00 |
| Haselnußpaste | 5,70 |
| Mandelpaste, hell (geröstet) | 2,90 |
| Sonnenblumenlecithin | 0,40 |
| Steinsalz/Kristallsalz | 0,20 |
| Vanilleextrakt | 0,10 |

Die Kakaomasse, das Salz, die Kakaobutter, der Weißzucker und das Hafermehl (inter*quell* GmbH, Deutschland) wurden gemischt, gewalzt und conchiert. Der chonchierten Masse wurde sodann die übrigen Bestandteile zugesetzt. Aus der so erhaltenen Schokoladenmasse wurden in dem Fachmann bekannter Art und Weise Tafeln hergestellt.

Die so erhaltene, vegane Schokoladekuvertüre war zartschmelzend und durch eine angenehme, sehr feine Textur gekennzeichnet.

### Beispiel 2:

Es wurden zwei vegane Schokoladenmassen A und B beinhaltend Hafermehl, Weißzucker, Kakaobutter, Kakaomasse und Aromastoffe entsprechend der Vorgehensweise in Beispiel 1 hergestellt. Schokoladenmasse A enthielt, ebenso wie die Schokoladenmasse aus Beispiel 1, mit α-Amylase hydrolysiertes Haferpulver, während die Schokoladenmasse **B** die gleiche Menge an herkömmlichem, nicht-hydrolysiertem Hafermehl enthielt, welches auch zur Herstellung der in der CN 109 090 314 A1 beschriebenen Schokoladenmassen eingesetzt wird. Von den so erhaltenen Schokoladenmassen wird der Schmelz und das Mundgefühl in einem Probandentest analysiert. Es zeigt sich, dass die Schokoladenmasse mit herkömmlichem Hafermehl (Schokoladenmasse **B**) einen gegenüber der Schokoladenmasse **A** erkennbar verzögerten Schmelz und darüber hinaus ein deutlich raueres und pastöseres Mundgefühl (und damit eine gegenüber der Schokoladenmasse **A** verschlechterte Textur) zeigte.

### Ausführungsformen

1. Eine Schokoladenmasse, beinhaltend mindestens einen Bestandteil von Kakaobohnen ausgewählt aus der Gruppe bestehend aus Kakaobutter und Kakaomasse, mindestens ein Süßungsmittel und mindestens 1 Gew.-%, bezogen auf das Gesamtgewicht der Schokoladenmasse, hydrolysiertes Hafermehl.
2. Die Schokoladenmasse nach Ausführ-ungsform 1, wobei die Schokoladenmasse das hydrolysierte Hafermehl in einer Menge in einem Bereich von 2,5 bis 25 Gew.-%, bezogen auf das Gesamtgewicht der Schokoladenmasse, beinhaltet.
3. Die Schokoladenmasse nach Ausführ-ungsform 1 oder 2, wobei die Schokoladenmasse mehr als 8 Gew.-%, bezogen auf das Gesamtgewicht der Schokoladenmasse, des hydrolysierten Hafermehls beinhaltet.
4. Die Schokoladenmasse nach einer der vorhergehenden Ausführungsformen, wobei das hydrolysierte Hafermehl erhältlich ist durch enzymatische Hydrolyse von Hafermehl mit α-Amylase.
5. Die Schokoladenmasse nach einer der vorhergehenden Ausführungsformen, wobei die Schokoladenmasse weiterhin mindestens einen Zusatzstoff ausgewählt aus der Gruppe bestehend aus mindestens einem Salz, mindestens einem Emulgator, mindestens einem ölhaltigen Bestandteil, mindestens einem Aromastoff, mindestens einem Gewürz und einer Mischung aus mindestens zwei dieser Bestandteile beinhaltet.
6. Ein Schokoladenerzeugnis, hergestellt aus einer Schokoladenmasse nach einer der Ausführungsformen 1 bis 5.
7. Ein Verfahren zur Herstellung einer Schokoladenmasse, umfassend die Verfahrensschritte:
   i) Mischen von mindestens einem Süßungsmittel mit mindestens einem Bestandteil von Kakaobohnen ausgewählt aus der Gruppe bestehend aus Kakaobutter und Kakaomasse unter Erhalt einer Grundmasse;
   ii) Herstellung einer Schokoladenmasse aus dieser Grundmasse mittels eines Zerkleinerungs- und Conchierschritte umfassenden Verfahrens;
   wobei während des Verfahrensschrittes i), während des Verfahrensschrittes ii) oder während beider Verfahrensschritte i) und ii) hydrolysiertes Hafermehl in einer solchen Menge eingesetzt wird, dass die im Verfahrensschritt ii) erhaltene Schokoladenmasse mindestens 1 Gew.-%, bezogen auf das Gesamtgewicht der Schokoladenmasse, des hydrolysierten Hafermehls beinhaltet.
8. Das Verfahren nach Ausführungsform 7, wobei die im Verfahrensschritt ii) erhaltene Schokoladenmasse das hydrolysierte Hafermehl in einer Menge in einem Bereich von 2,5 bis 25 Gew.-%, bezogen auf das Gesamtgewicht der Schokoladenmasse, beinhaltet.
9. Das Verfahren nach Ausführungsform 7 oder 8, wobei das hydrolysierte Hafermehl erhältlich ist durch enzymatische Hydrolyse von Hafermehl mit α-Amylase.
10. Das Verfahren nach einer der Ausführungsformen 7 bis 9, wobei der Schokoladenmasse vor, während oder nach dem Conchieren mindestens ein Zusatzstoff ausgewählt aus der Gruppe bestehend aus mindestens einem Salz, mindestens einem Emulgator, mindestens einem ölhaltigen Bestandteil, mindestens einem Aromastoff, mindestens einem Gewürz und einer Mischung aus mindestens zwei dieser Bestandteile zugesetzt wird.
11. Eine Schokoladenmasse, erhältlich durch das Verfahren nach einer der Ausführungsformen 7 bis 10.
12. Ein Verfahren zur Herstellung eines Schokoladenerzeugnisses, umfassend die Verfahrensschritte:
   I) Bereitstellen einer Schokoladenmasse nach einer der Ausführungsformen 1 bis 5 oder 11;
   II) Formen der Schokoladenmasse unter Erhalt eines Schokoladenerzeugnisses.
13. Ein Schokoladenerzeugnis, erhältlich durch das Verfahren nach Ausführungsform 12.
14. Verwendung von hydrolysiertem Hafermehl zur Herstellung veganer Schokolade.
15. Die Verwendung nach Ausführ-rungsform 14, wobei das hydrolysierte Hafermehl erhältlich ist durch enzymatische Hydrolyse von Hafermehl mit α-Amylase.

## Patentansprüche

1. Eine Schokoladenmasse, beinhaltend mindestens einen Bestandteil von Kakaobohnen ausgewählt aus der Gruppe bestehend aus Kakaobutter und Kakaomasse, mindestens ein Süßungsmittel und mindestens 1 Gew.-%, bezogen auf das Gesamtgewicht der Schokoladenmasse, hydrolysiertes Hafermehl.

2. Die Schokoladenmasse nach Anspruch 1, wobei die Schokoladenmasse das hydrolysierte Hafermehl in einer Menge in einem Bereich von 2,5 bis 25 Gew.-%, bezogen auf das Gesamtgewicht der Schokoladenmasse, beinhaltet.

3. Die Schokoladenmasse nach Anspruch 1 oder 2, wobei die Schokoladenmasse mehr als 8 Gew.-%, bezogen auf das Gesamtgewicht der Schokoladenmasse, des hydrolysierten Hafermehls beinhaltet.

4. Die Schokoladenmasse nach einem der vorhergehenden Ansprüche, wobei das hydrolysierte Hafermehl erhältlich ist durch enzymatische Hydrolyse von Hafermehl mit α-Amylase.

5. Die Schokoladenmasse nach einem der vorhergehenden Ansprüche, wobei die Schokoladenmasse weiterhin mindestens einen Zusatzstoff ausgewählt aus der Gruppe bestehend aus mindestens einem Salz, mindestens einem Emulgator, mindestens einem ölhaltigen Bestandteil, mindestens einem Aromastoff, mindestens einem Gewürz und einer Mischung aus mindestens zwei dieser Bestandteile beinhaltet.

6. Ein Schokoladenerzeugnis, hergestellt aus einer Schokoladenmasse nach einem der Ansprüche 1 bis 5.

7. Ein Verfahren zur Herstellung einer Schokoladenmasse, umfassend die Verfahrensschritte:
i) Mischen von mindestens einem Süßungsmittel mit mindestens einem Bestandteil von Kakaobohnen ausgewählt aus der Gruppe bestehend aus Kakaobutter und Kakaomasse unter Erhalt einer Grundmasse;
ii) Herstellung einer Schokoladenmasse aus dieser Grundmasse mittels eines Zerkleinerungs- und Conchierschritte umfassenden Verfahrens;
wobei während des Verfahrensschrittes i), während des Verfahrensschrittes ii) oder während beider Verfahrensschritte i) und ii) hydrolysiertes Hafermehl in einer solchen Menge eingesetzt wird, dass die im Verfahrensschritt ii) erhaltene Schokoladenmasse mindestens 1 Gew.-%, bezogen auf das Gesamtgewicht der Schokoladenmasse, des hydrolysierten Hafermehls beinhaltet.

8. Das Verfahren nach Anspruch 7, wobei die im Verfahrensschritt ii) erhaltene Schokoladenmasse das hydrolysierte Hafermehl in einer Menge in einem Bereich von 2,5 bis 25 Gew.-%, bezogen auf das Gesamtgewicht der Schokoladenmasse, beinhaltet.

9. Das Verfahren nach Anspruch 7 oder 8, wobei das hydrolysierte Hafermehl erhältlich ist durch enzymatische Hydrolyse von Hafermehl mit α-Amylase.

10. Das Verfahren nach einem der Ansprüche 7 bis 9, wobei der Schokoladenmasse vor, während oder nach dem Conchieren mindestens ein Zusatzstoff ausgewählt aus der Gruppe bestehend aus mindestens einem Salz, mindestens einem Emulgator, mindestens einem ölhaltigen Bestandteil, mindestens einem Aromastoff, mindestens einem Gewürz und einer Mischung aus mindestens zwei dieser Bestandteile zugesetzt wird.

11. Eine Schokoladenmasse, erhältlich durch das Verfahren nach einem der Ansprüche 7 bis 10.

12. Ein Verfahren zur Herstellung eines Schokoladenerzeugnisses, umfassend die Verfahrensschritte:
I) Bereitstellen einer Schokoladenmasse nach einem der Ansprüche 1 bis 5 oder 10;
II) Formen der Schokoladenmasse unter Erhalt eines Schokoladenerzeugnisses.

13. Ein Schokoladenerzeugnis, erhältlich durch das Verfahren nach Anspruch 12.

14. Verwendung von hydrolysiertem Hafermehl zur Herstellung veganer Schokolade.

15. Die Verwendung nach Anspruch 14, wobei das hydrolysierte Hafermehl erhältlich ist durch enzymatische Hydrolyse von Hafermehl mit α-Amylase.
